# EUROPEAN PATENT APPLICATION

(11) **EP 2 448 273 A2**
(43) Date of publication of application: **02.05.2012**
(21) Application number: 10792309.6
(22) Date of filing: 22.06.2010
(51) Int. Cl.: H04N 13/00, H04N 7/08, H04N 5/445

(54) **VIDEO DISPLAY DEVICE AND OPERATING METHOD THEREFOR**

(30) Priority: 22.06.2009 US 218992 P
(71) Applicant: LG Electronics Inc., Seoul 150-721 (KR)
(72) Inventor: HWANGBO, Sang Kyu, Seoul 137-724 (KR); LEE, Yong Uk, Seoul 137-724 (KR)
(74) Representative: Cabinet Plasseraud
(86) International application number: PCT/KR2010/004034
(87) International publication number: WO 2010/151027

(57) **Abstract**

The present invention relates to a video display device and an operating method therefor. An operating method for a video display device according to one embodiment of the present invention comprises the steps of : determining whether or not a text is contained in an input video; determining whether or not a text display mode is a 2D text display mode when a text is contained in the video; separating a text region in the video when the text display mode is a 2D text display mode; performing 3D signal processing on the video region separated from the text region; performing 2D signal processing on the text region; and displaying the 2D signal-processed text region and the 3D signal-processed video region on a display. Accordingly, text can be displayed clearly when a 3D video is displayed.

## Description

### [Technical Field]

The present invention relates to a video display device and an operation method for the device. More specifically, the present invention relates to a video display device or a video display method capable of displaying text clearly when a 3D video is displayed.

### [Background Art]

A video display device refers to a device equipped with a function of displaying a video for a user who wants to watch the video. The user can watch broadcasting programs through the video display device. The video display device displays a broadcasting program selected from among broadcasting signals transmitted from a broadcasting station. Currently, broadcasting systems around the world are in transition from analog to digital broadcasts.

Digital broadcasting refers to using digital data to carry video and audio signals. Compared to the conventional analog technology, digital broadcasting suffers small data loss against external noise and provides robust error-correction, high resolution, and clear display. Unlink the analog technology, digital broadcasting can support two-way services.

Recently, research on stereoscopic video display is being conducted in various ways; the stereoscopic video display technology is becoming more popular and being put into actual use for various other technology domains, not to mention computer graphics.

### [Disclosure]

### [Technical Problem]

The present invention has been made in an effort to provide a video display device and an operating method for the device capable of displaying text clearly at the time of displaying a 3D video.

Another object of the present invention is to provide a video display device and an operating method for the device capable of displaying text in 2D or 3D according to the user's selection.

### [Technical Solution]

To achieve the object above, an operating method for a video display device according to an embodiment of the present invention comprises the steps of : determining whether or not a text is contained in an input video; determining whether or not a text display mode is a 2D text display mode when a text is contained in the video; separating a text region in the video when the text display mode is a 2D text display mode; performing 3D signal processing on the video region separated from the text region; performing 2D signal processing on the text region; and displaying the 2D signal-processed text region and the 3D signal-processed video region on a display.

Moreover, to achieve the object above, a video display device according to an embodiment of the present invention comprises a controller to separate a text region in an input video when a display mode for text contained in the video corresponds to a 2D text display mode and to perform 3D signal processing on a video region separated from the text region and to perform 2D signal processing on the text region; and a display to display the 2D signal-processed text region and the 3D signal-processed video region.

### [Advantageous Effects]

According to the present invention, at the time of displaying a 3D video, if a text display mode is 2D text display mode, a text region is separated and displayed after undergoing 2D signal processing, thereby making text display clearly recognized at the time of 3D video display.

Also, when a 3D video is displayed, text can be displayed in 2D or 3D according to the user's selection.

In addition, when a 3D video is displayed, a 3D format can be determined according to the user's selection; and a text region can be separated according to the corresponding 3D format such that position of the text region is varied according to the format, thereby displaying text clearly.

### [Brief Description of the Drawings]

FIG. 1 illustrates an internal block diagram of a video display device according to one embodiment of the present invention;
FIG. 2 is an internal block diagram of a controller of FIG. 1;
FIG. 3 is an internal block diagram of a video decoder of FIG. 2;
FIG. 4 illustrates various formats of a 3D video;
FIG. 5 illustrates operation of a glass-type additional display according to a format of FIG. 4;
FIG. 6 illustrates a case where a video is formed on the left and the right eye image, respectively;
FIG. 7 illustrates depth sensed from a 3D video according to the distance between the left and the right eye image;
FIG. 8 is a flow diagram illustrating an operating method for a video display device according to an embodiment of the present invention; and
FIGS. 9 to 16 illustrate various examples of an operating method for a video display device of FIG. 8.

### [Best Mode]

In what follows, the present invention will be described in more detail with reference to appended drawings.

In what follows, suffixes of "module" and "unit" given to component of the invention have been introduced only for the sake of simplicity to describe the present invention and do not carry particular meanings or functions distinguished from each other. Therefore, the "module" and "unit" can be used interchangeably with each other.

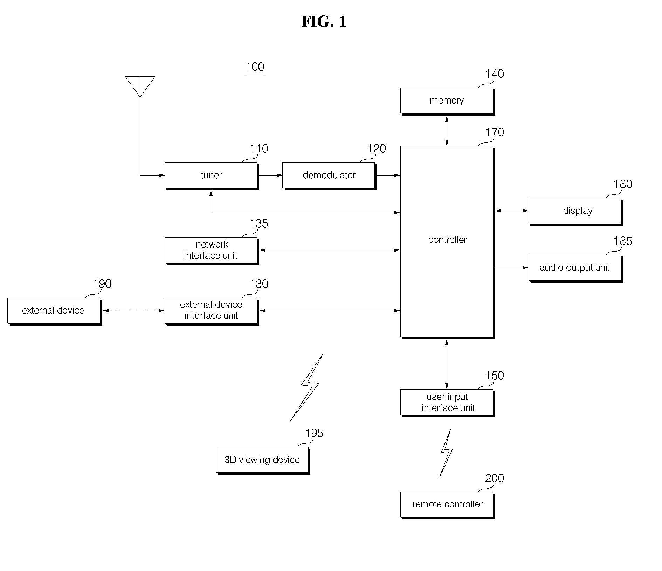

FIG. 1 illustrates an internal block diagram of a video display device according to one embodiment of the present invention.

With reference to FIG. 1, a video display device 100 according to one embodiment of the present invention comprises a tuner 110, a demodulator 120, an external device interface unit 130, a network interface unit 135, a memory 140, an user input interface unit 150, a controller 170, a display 180, an audio output unit 185, and an 3D viewing device 195.

The tuner 110 selects RF (Radio Frequency) broadcasting signals corresponding to a channel selected by the user or all the pre-stored channels from among RF broadcasting signals received through an antenna. Also, the tuner 110 converts the selected RF broadcasting signal into an intermediate frequency signal, a baseband video, or a sound signal.

For example, if the selected RF broadcasting signal is a digital broadcasting signal, the tuner 110 converts the digital broadcasting signal into a digital IF (DIF) signal whereas the tuner 110 converts the selected RF broadcasting signal into an analog baseband video or audio signal (CVBS/SIF) if the selected RF broadcasting signal corresponds to an analog broadcasting signal. In other words, the tuner 110 can process either a digital broadcasting signal or an analog broadcasting signal. The analog baseband video or audio signal (CVBS/SIF) output from the tuner 110 can be input directly to the controller 170.

Also, the tuner 110 can receive a single carrier RF broadcasting signal compliant with ATSC (Advanced Television System Committee) specifications or a multi-carrier RF broadcasting signal compliant with DVB (Digital Video Broadcasting) specifications.

Meanwhile, from among RF broadcasting signals received through an antenna according to the present invention, the tuner 110 can select RF broadcasting signals of the whole broadcasting channels pre-stored through a channel memory function sequentially and convert the selected RF broadcasting signal into an intermediate frequency signal or a baseband video or sound signal.

The demodulator 120 receives a digital IF (DIF) signal converted by the turner 110 and performs demodulation.

For example, if the digital IF signal output from the tuner 110 follows ATSC specifications, the demodulator 120 carries out 8-VSB (8-Vestigal Side Band) demodulation. Also, the demodulator 120 may perform channel demodulation. To this purpose, the demodulator 120 may incorporate a trellis decoder, a de-interleaver, and a Reed-Solomon decoder; and perform trellis demodulation, de-interleaving, and Read-Solomon demodulation.

For example, if the digital IF signal output from the tuner 110 follows DVB specifications, the demodulator 120 carries out COFDMA (Coded Orthogonal Frequency Division Modulation) demodulation. In addition, the demodulator 120 may perform channel demodulation. To this purposed, the demodulator 120 may incorporate a convolution decoder, a de-interleaver, and a Read-Solomon decoder; and perform convolution demodulation, de-interleaving, and Read-Solomon demodulation.

The demodulator 120 can output a stream signal TS after carrying out demodulation and channel demodulation. At this time, the stream signal may correspond to a multiplexed signal comprising a video signal, an audio signal, or a data signal. For example, the stream signal may correspond to an MPEG-2 TS (Transport Stream) carrying a multiplexed signal comprising a video signal according to MPEG-2 specifications and an audio signal according to Dolby AC-3 specifications. To be specific, the MPEG-2 TS can include a header of 4 bytes and a payload of 184 bytes.

On the other hand, the demodulator 120 described above, can be implemented separately according to ATSC specifications or DVB specifications. In other words, the demodulator 120 can be implemented as an ATSC demodulator or a DVB demodulator.

The stream signal output from the demodulator 120 can be input to the controller 170. The controller 170 carries out inverse multiplexing, video/audio signal processing, etc. and outputs a video on the display 180 and outputs audio to the audio output unit 185.

The external device interface unit 130 can transmit data to or receive data from a connected external device 190. To this purpose, the external device interface unit 130 can include an A/V input-output unit (not shown) or a wireless communication unit (not shown).

The external device interface unit 130 can be connected wired or wirelessly to an external device 190 such as a DVD (Digital Versatile Disk), a Bluray disk, a game device, a camera, a camcorder, a computer (a notebook), etc. The external device interface unit 130, through the external device 190 connected, transfers video, audio, or data signals input from the outside to the controller 170. Also, the external device interface unit 130 can output video, audio, or data signals processed by the controller 170 to an external device connected to the external device interface unit 130. To this purpose, the external device interface unit 130 can include an A/V input-output unit (not shown) or a wireless communication unit (not shown).

The A/V input-output unit, to route video and audio signals of an external device to the video display device 100, may include a USB port, a CVBS (Composite Video Baseband Signal) port, a component port, an S-video port (analog), a DVI (Digital Visual Interface) port, a HDMI (High Definition Multimedia Interface) port, an RGB port, a D-SUB port, etc.

The wireless communication unit can carry out short range wireless communication with other electronic devices. The video display device 100 can be connected to a network with other electronic devices according to communication specifications such as Bluetooth, RFID (Radio Frequency Identification), IrDA (infrared Data Association), UWB (Ultra Wideband), ZigBee, DLNA (Digital Living Network Alliance), etc.

Also, the external device interface unit 130 can carry out input/output operation of a set-top box, being connected to the set-top box through at least one of various ports described above.

Meanwhile, the external device interface unit 130 can transmit or receive data to and from the 3D viewing device 195.

The network interface unit 135 provides an interface to connect the video display device 100 to a wired/wireless network including the Internet. The network interface unit 135 can incorporate an Ethernet port to connect to a wired network while the network interface unit 135 may employ WLAN (Wireless LAN) (Wi-Fi), Wibro (Wireless broadband), Wimax (World Interoperability for Microwave Access), or HSDPA (High Speed Downlink Packet Access) specifications to connect to a wireless network.

The network interface unit 135, through the network, can receive contents or data provided by the Internet, contents providers, or network operators. In other words, the network interface unit 135 can receive contents such as movies, advertisements, games, VODs, broadcasting signals, etc. provided by the Internet, contents providers, and so on and information related to the contents through the network. Also, the network interface unit 135 can receive update information and update files provided by network operators. Also, the network interface unit 135 can transmit data to the Internet, contents providers, or network operators.

In addition, the network interface unit 135, to support two-way communication for an IP (Internet Protocol) TV, for example, can receive video, audio, or data signals processed by a set-top box for IPTV and transfer the signals to the controller 170; and transfer signals processed by the controller 170 to the set-top box for IPTV.

Meanwhile, the IPTV above may denote ADSL-TV, VDSL-TV, or FTTH-TV depending on the type of transmission network; furthermore, the IPTV may include TV over DSL, video over DSL, TV over IP (TVIP), broadband TV (BTV), etc. In addition, the IPTV may include an Internet TV or a full-browsing TV capable of connecting to the Internet.

The memory 140 may store programs for control and signal processing of components inside the controller 170; or processed video, audio, or data signals.

Also, the memory 140 may provide a function for temporarily storing video, audio, or data signals input to the external device interface unit 130. In addition, the memory 140 can store information about predetermined broadcasting channels through a channel memory function such as a channel map.

The memory 140 can include at least one type of storage medium from among flash memory type, hard disk type, multimedia card micro type, card-type memory (e.g., SD or XD memory), RAM, and ROM (e.g., EEPROM). The video display device 100 can play the files (video files, still image files, music files, document files, etc.) stored in the memory 140 and provide the contents of the files to the user.

Although FIG. 1 illustrates an embodiment where the memory 140 is implemented separately from the controller 170, the present invention is not limited to the embodiment. The memory 140 can be included in the controller 170.

The user input interface unit 150 transfers a signal input by the user to the controller 170 or transfers a signal from the controller 170 to the user.

For example, the user input interface unit 150, according to various types of communication method such as RF (Radio Frequency) communication or IR (Infrared) communication, may receive a user input signal such as power on/off, channel selection, screen setup, etc. coming from a remote controller 200 or transmit signals from the controller 170 to the remote controller 200.

Also, the user input interface unit 150 can transfer a user input signal such as a power key, a channel key, a volume key, a setup key, etc. input from a local key (not shown) to the controller 170.

Moreover, the user input interface unit 150 can transfer a user input signal input from a sensing unit (not shown) sensing a gesture of the user or a signal from the controller 170 to the sensing unit (not shown). Here, the sensing unit (not shown) may include a touch sensor, an audio sensor, a position sensor, a motion sensor, etc.

The controller 170 can inversely multiplex input streams through the tuner 110, the demodulator 120, or the external device interface unit 130; or generate and output signals for video or audio output by processing demultiplexed signals.

Video signals processed in the controller 170 can be input to the display 180 and displayed in the form of a video according to the corresponding video signals. Also, video signals processed in the controller 170 can be input to an external output device through the external device interface unit 130.

Audio signals processed in the controller 170 can be input to the audio output unit 185 and output in the form of audio. Also, audio signals processed in the controller 170 can be input to an external output device through the external device interface unit 130.

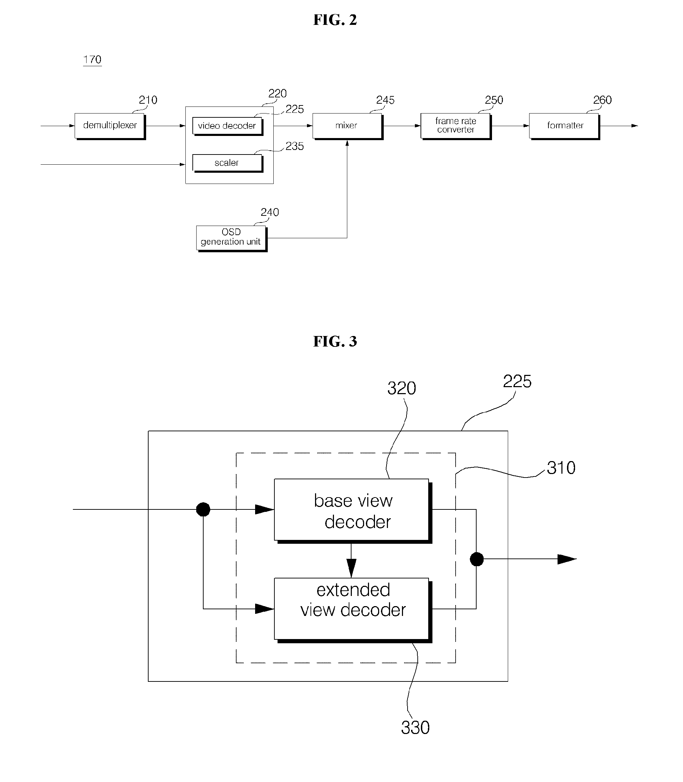

Although not shown in FIG. 1, the controller 170 can include an inverse multiplexing unit, a video processing unit, etc., which will be described later with reference to FIG. 2.

On the other hand, the controller 170 can control the overall operation within the video display device 100. For example, the controller 170, by controlling the tuner 110, can make the video display device 100 tuned to a channel selected by the user or RF broadcasts corresponding to a pre-stored channel.

Also, the controller 170 can control the video display device 100 by using a user command input through the user input interface unit 150 or by using internal programs.

For example, the controller 170 controls the tuner 110 such that signals of a selected channel are input according to a predetermined channel selection command received through the user input interface unit 150. Afterwards, the controller 170 processes video, audio, or data signals of the selected channel. The controller 170 controls such that the information about a channel selected by the user is output to the display 180 or the audio output unit 185 together with video or audio signals processed.

As another example, the controller 170, according to an external device video play command received through the user input interface unit 150, controls video or audio signals from an external device such as a camera or a camcorder input through the external device interface unit 130 to be output through the display 180 or the audio output unit 185.

Meanwhile, the controller 170 can control the display to display a video. For example, the controller 170 can control the display 180 to display a broadcasting video input through the tuner 110, an external video input through the external device interface unit 130, a video input through the network interface unit 135, or a video stored in the memory 140.

At this time, the video displayed on the display 180 can be still or moving images; and it can be 2D or 3D video.

Meanwhile, the controller 170 selects predetermined objects from the video displayed on the display 180 to be generated and displayed as 3D objects. For example, the object can be at least one of a web page accessed (newspaper, magazine, etc.), EPG (Electronic Program Guide), a menu, a widget, an icon, a still image, a moving image, and text.

Those 3D objects can be made to provide a sense of depth different from the video displayed on the display 180. Preferably, the 3D object can be processed to be seen more protruding than a video displayed on the display 180.

On the other hand, the controller 170, based on captured images obtained from a capture unit (not shown), recognizes the position of the user. For example, the controller 170 can recognize the distance (z-coordinate) between the user and the video display device 100. Besides, the controller 170 can recognize the x-coordinate and the y-coordinate corresponding to the position of the user within the video display device 100.

Meanwhile, although not shown in the figure, the video display device 100 can further comprise a channel browsing processing unit which generates thumbnail images corresponding to channel signals or an external input signals. The channel browsing processing unit can receive a stream signal (TS) output from the demodulator 120 or a stream signal output from the external device interface unit 130; and extract images from the input stream signal, generating thumbnail images. The generated thumbnail images can be provided to the controller 170 as they are or after being coded. Also, the generated thumbnail images can be coded in the form of a stream and thus provided to the controller 170. The controller 170 can display a thumbnail list of multiple thumbnail images on the display 180, where the thumbnail list comprises the inpu thumbnail images. At this time, the thumbnail list can be displayed in the form of an easy view such that thumbnail images are displayed in a particular region while a predetermined image is being displayed; or the thumbnail list can be displayed in the view all mode such that thumbnail images occupy almost of the region of the display 180.

The display 180 converts a video signal, a data signal, an OSD signal, a control signal, etc. processed by the controller 170 or a video signal, a data signal, a control signal, etc. received from the external device interface unit 130; and generates a driving signal.

The display 180 can be implemented by PDP, LCD, OLED, or flexible display; and in particular, according to an embodiment of the present invention, it is preferable to use one capable of 3D display.

For display of a 3D video, the display 180 can be classified into an additional display type and a self-display type.

The self-display type refers to implementing a 3D video in the display 180 without using an additional display (e.g., glasses); various methods can be applied to implement the self-display, including a lenticular method, a parallax barrier method, and so on.

On the other hand, the additional display type refers to implementing a 3D video by using an additional display together with the display 180; various methods can be applied to implement the additional display, including a head mount display (HMD) type, a glass type, and so on. The glasses used for a 3D video display can be divided into two types: a passive method using polarized glasses, for example and an active method where shutter glasses are a good example. In the same way, the head mount display type can also be divided into two types: a passive and an active method.

In an embodiment of the present invention, it is assumed that an 3D viewing device 195 is employed for the user to watch a 3D video. The 3D viewing device 195 can be divided into a passive and an active type.

Meanwhile, the display 180, being implemented by a touch screen, can be used as an input device as well as an output device.

The audio output unit 185 receives a processed audio signal (e.g., a stereo signal, a 3.1 channel signal, or a 5.1 channel signal) from the controller 170 and outputs the received audio signal as voice. The audio output unit 185 may be implemented in various types of speakers.

Meanwhile, to detect a gesture of the user, as described above, the video display device 100 can further comprise a sensing unit (not shown) incorporating at least one of a touch sensor, an audio sensor, a position sensor, and a motion sensor. The signal detected by the sensing unit (not shown) is transferred to the controller 170 through the user input interface unit 150.

The controller 170 can detect a gesture of the user by using a video captured by the capture unit (not shown) or a signal sensed from the sensing unit (not shown) or by using a combination of the image and the sensed signal.

The remote controller 200 transmits a user input to the user input interface unit 150. To this purpose, the remote controller 200 can perform communication by following Bluetooth, RF (Radio Frequency) communication, infrared (IR) communication, UWB (Ultra Wideband), ZigBee specifications, and so on. The remote controller 200 receives a video, an audio, or a data signal output from the user input interface unit 150 and displays the signal or outputs the signal as voice.

The video display device 100 described above can be implemented either as a fixed type or a mobile type. The fixed type may be a digital broadcasting receiver which can receive digital broadcasting following at least one of ATSC (7-VSB), DVB-T (COFDM), and ISDB-T (BST-OFDM) format. On the other hand, the mobile type may be a digital broadcasting receiver which can receive digital broadcasting following at least one of terrestrial DMB, satellite DMB, ATSC-M/H, DVB-H (COFDM), and MediaFLO (Media Forward Link Only) format. The video display device 100 may also be implemented in the form of a digital broadcasting receiver for cable TV, satellite TV, and IPTV.

Meanwhile, the video display device described in this document can include a TV receiver, a cellular phone, a smart phone, a notebook computer, a digital broadcasting terminal, a PDA (Personal Digital Assistant), a PMP (Portable Multimedia Player), etc.

The block diagram of the video display device 100 of FIG. 1 illustrates one embodiment of the present invention. Each component of the block diagram can be merged, added, or removed according to actual specifications of the video display device 100 to be implemented. In other words, depending on requirements, two or more components can be merged into a single component; similarly, a single component can be divided into two or more components. Also, it should be understood that the function carried out in each block is intended simply to describe an embodiment of the present invention and therefore, specific operation or a specific device related to the function does not limit the claims defined by the present invention.

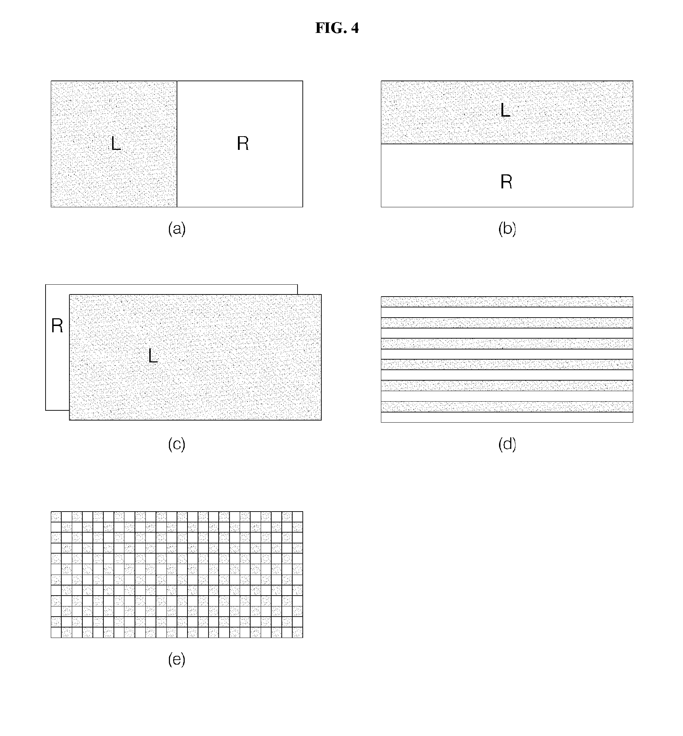

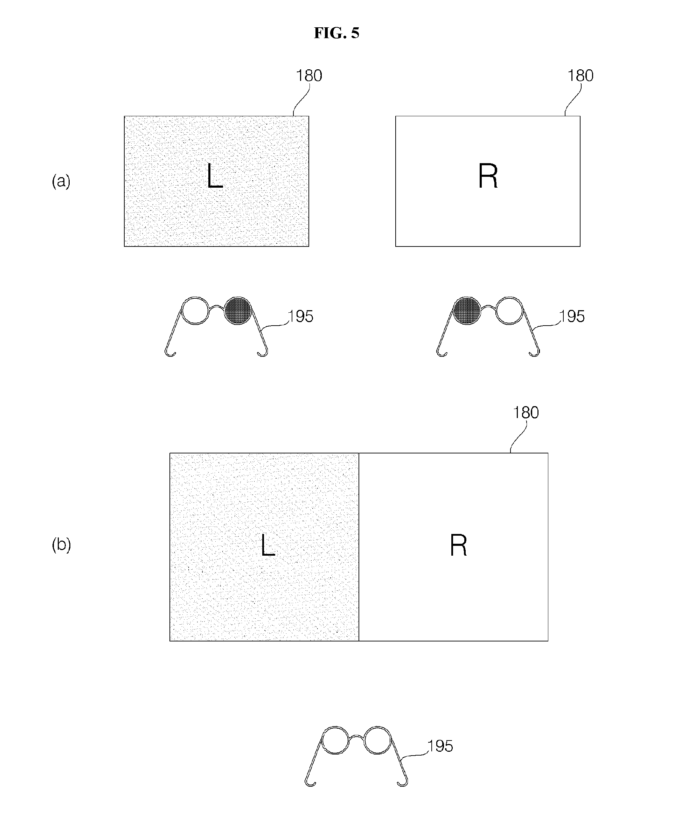

FIG. 2 is an internal block diagram of a controller of FIG. 1; FIG. 3 is an internal block diagram of a video decoder of FIG. 2; FIG. 4 illustrates various formats of a 3D video ; and FIG. 5 illustrates operation of a glass-type additional display according to a format of FIG. 4.

With reference to the figures, the controller 170 according to one embodiment of the present invention can further comprise a demultiplexer 210, a video processing unit 220, an OSD generation unit 240, a mixer 245, a frame rate converter 250, and a formatter 260. Besides, the controller 170 can further comprise a voice processing unit (not shown) and a data processing unit (not shown).

The demultiplexer 210 inversely multiplexes input streams. For example, if MPEG-2 transport streams are being input, the demultiplexer 210 inversely multiplexes the input streams and separates them into a video, an audio, and a data signal. Here, the stream signal fed into the demultiplexer 210 may correspond to a stream signal output from the tuner 110, the demodulator 120, or the external device interface unit 130.

The video processing unit 220 can carry out video processing for a demultiplexed video signal. To this purpose, the video processing unit 220 can be equipped with a video decoder 225 and a scaler 235.

The video decoder 225 demodulates the demultiplexed video signal and the scaler 235 performs scaling of resolution for the demodulated video signal to be fit into the display 180.

The video decoder 225 can incorporate decoders in various formats.

FIG. 3 illustrates a 3D video decoder 310 inside the video decoder 220 for demodulating a 3D video signal.

The demultiplexed video signal fed into the 3D video decoder 310 may correspond to a video signal encoded according to MVC (Multi-view Video Coding) format, a video signal encoded according to dual AVC format, or a mixed signal of the separately encoded left and right eye image signal.

If an input signal is a mix of the left and the right eye image signal as described above, a 2D video decoder can still be used as it is. For example, if the demultiplexed video signal is a video signal encoded according to the MPEG-2 format or the AVC format, the video signal can be demodulated by the MPEG-2 decoder or the AVC decoder.

Meanwhile, the 3D video decoder 310 incorporates a base view decoder 320 and an extended view decoder 330.

For example, if an extended view video among encoded 3D video signals fed into the 3D video decoder 310 has been encoded according to the MVC format, a corresponding base view video should be demodulated to demodulate the extended view video. To this purpose, a base view video signal demodulated by the base view decoder 320 is transferred to the extended view decoder 330.

As a result, the demodulated 3D video signal output from the 3D video decoder 310 is made to have a predetermined delay until demodulation of the extended view decoder 330 is completed. Eventually, a demodulated base view video signal and a demodulated extended view video signal are combined and output.

In addition, if the extended view video signal among encoded 3D video signals fed into the 3D video decoder 310 is encoded according to the AVC format, different from the MVC case described above, demodulation of the extended view video signal and the base view video signal can be processed simultaneously. Therefore, the base view decoder 320 and the extended view decoder 330 can perform demodulation operation independently of each other. Eventually, a demodulated base view video signal and a demodulated extended view video signal are combined and output.

Meanwhile, a video signal demodulated by the video processing unit 220 can be classified into three cases: a case consisting of only 2D video signals, a case consisting of a combination of a 2D video signal and a 3D video signal, and a case consisting of only 3D video signals.

For example, if an external video signal input from an external device 190 or a broadcasting video signal received from the tuner 110 can be classified into three cases: a case consisting of only 2D video signals, a case consisting of a combination of a 2D video signal and a 3D video signal, and a case consisting of only 3D video signals. Afterwards, the video signal is processed by the controller 170, particularly by the video processing unit 220 and is output in the form of a 2D video signal; a mixed signal of a 2D and a 3D video signal; and a 3D video signal.

Meanwhile, the video signal demodulated by the video processing unit 220 may correspond to a 3D video signal in various formats. For example, the video signal can be a 3D video signal consisting of a color video and a depth video; or a 3D video signal consisting of multi-view video signals. The multi-view video signal can include the left and the right eye image signal, for example.

Here, the format of a 3D video signal, as shown in FIG. 4, may follow a side-by-side format (FIG. 4(a)) which disposes the left (L) and the right (R) eye image signal alternately from left to right; a frame sequential format (FIG. 4(b)) which frames the left (L) and the right (R) eye image in a time-division sequence; a top-down format (FIG. 4(c)) which disposes the left (L) and the right (R) eye image signal in an up-down direction; an interlaced format (FIG. 4(d)) which mixes the left and the right eye image signal for every second line; and a checker box format (FIG. 4(e)) which mixes the left and the right eye image signal in units of boxes.

The OSD generation unit 240 generates an OSD signal by itself according to an input from the user. For example, based on an input from the user, the OSD generation unit 240 can generate a signal to display various kinds of information on the screen of the display 180 in the form of graphics or text. The generated OSD signal can include various types of data such as a user interface screen, a screen displaying various menus, widgets, icons, etc. Also, the generated OSD signal can include both 2D and 3D objects.

The mixer 245 can mix the OSD signal generated by the OSD generation unit 240 and the demodulated video signal video-processed at the video processing unit 220. At this time, each of the OSD signal and the demodulated video signal can include at least one of a 2D and a 3D signal. The mixed video signal is provided to the frame rate converter 250.

The frame rate converter (FRC) 250 converts frame rate of an input video. For example, the frame rate converter 250 converts 60 Hz of frame rate into 120 Hz or 240 Hz. When 60 Hz of frame rate is converted into 120 Hz, between a first and a second frame, the same first frame is inserted or a third frame predicted from the first and the second frame is inserted. When 60 Hz of frame rate is converted into 240 Hz, the same three frames are inserted or a three predicted frames are inserted.

On the other hand, the frame rate converter 250 can output a video according to the original input frame rate of the video without performing particular frame rate conversion. Preferably, when a 2D video signal is input, the video can be displayed according to its original frame rate. Meanwhile, when a 3D video signal is input, frame rate can be varied as described above.

The formatter 260 can receive a signal mixed at the mixer 245, namely a signal consisting of the OSD signal and the demodulated video signal, and separates the signal into a 2D and a 3D video signal.

In this document, it is assumed that a 3D video signal includes 3D objects; examples of 3D objects include PIP (Picture In Picture) videos (still or moving images), EPG showing broadcasting program information, various menus, widgets, icons, text, objects in a video, people, backgrounds, web pages (newspaper, magazine, etc.) and so on.

The formatter 260 can change the format of a 3D video signal. For example, the formatter 260 can change the format of a 3D video signal into one of various formats illustrated in FIG. 4. Therefore, according to the corresponding format, as shown in FIG. 5, operation of glass-type additional display can be carried out.

First, FIG. 5(a) illustrates operation of shutter glasses 195 when the formatter 260 outputs a 3D video signal by arranging the 3D video signal according to the frame sequential format from among the formats shown in FIG. 4.

In other words, when the left eye image signal (L) is displayed on the display 180, the eyepiece of the shutter glasses for the left eye becomes transparent while that for the right eye is closed; similarly, FIG. 5(b) illustrates a case where the eyepiece of the shutter glasses 195 for the left eye is closed while that for the right eye becomes transparent.

FIG. 5(b) illustrates operation of shutter glasses 195 when the formatter 260 outputs a 3D video signal by arranging the 3D video signal according to the side-by-side format from among the formats shown in FIG. 4. In this case, the shutter glasses 195 are a passive type and both of the eyepieces for the left and the right eye are kept to be transparent.

The formatter 260 can convert a 2D video signal into a 3D video signal. For example, according to a 3D video generation algorithm, the formatter 260 extracts edges or selectable objects from a 2D video signal and separates objects according to the extracted edges or the selectable objects into a 3D video signal. At this time, the generated 3D video signal, as described above, can be separated into the left (L) and the right (R) eye image signal which are subsequently arranged.

Meanwhile, the voice processing unit (not shown) within the controller 170 can perform voice processing on a demultiplexed voice signal. To this purpose, the voice processing unit (not shown) can incorporate a decoder in various formats.

For example, when a demultiplexed voice signal is an encoded voice signal, the encoded voice signal can be decoded. To be specific, if a demultiplexed voice signal is an encoded voice signal compliant with the MPEG-2 standard, the voice signal can be decoded by an MPEG-2 decoder. Also, if the demultiplexed voice signal is an encoded voice signal compliant with the MPEG-4 BSAC (Bit Sliced Arithmetic Coding) standard according to terrestrial DMB (Digital Multimedia Broadcasting) specifications, the voice signal can be decoded by an MPEG-4 decoder. Similarly, if the demultiplexed voice signal is an encoded voice signal compliant with the MPEG-2 AAC (Advanced Audio Codec) standard according to satellite DMB or DVB-H specifications, the voice signal can be decoded by an AAC decoder. Also, if the demultiplexed voice signal is an encoded voice signal compliant with the Dolby AC-3 specifications, the voice signal can be decoded by an AC-3 decoder.

Also, the voice processing unit (not shown) within the controller 170 can perform treble adjustment, volume adjustment, and so forth.

The data processing unit (not shown) within the controller 170 can perform data processing of a demultiplexed data signal. For example, if a demultiplexed data signal is an encoded data signal, the data signal can be decoded. The encoded data signal may correspond to EPG (Electronic Program Guide) information which includes broadcasting information about a time table of broadcasting programs broadcast at each channel. For example, the EPG information can be ATSC-PSIP (ATSC-Program and System Information Protocol) information in the case of ATSC system while the EPG information can include DVB-SI (DVB-Service Information) information in the case of DVB system. The ATSC-PSIP information or the DVB-SI information can be the information included in the stream described above, namely, in the header (2 bytes) of the MPEG-2 TS.

Although FIG. 2 illustrates a case where signals from the OSD generation unit 240 and the video processing unit 220 are mixed in the mixer 245 and 3D-processed in the formatter 260, the present invention is not limited to the above illustration; rather, the mixer may come after the formatter. In other words, it is equally possible such that the formatter 260 can perform 3D-processing on the output of the video processing unit 220 and the OSD generation unit 240 can perform 3D-processing along with OSD generation and finally, the mixer 245 can mix the separately processed 3D signals.

Likewise, the block diagram of the controller 170 of FIG. 2 is a block diagram for one embodiment of the present invention. Each component of the block diagram can be merged, added, or removed according to actual specifications of the controller 170 to be implemented.

In particular, the frame rate converter 250 and the formatter 260 can be implemented separately rather than inside the controller 170.

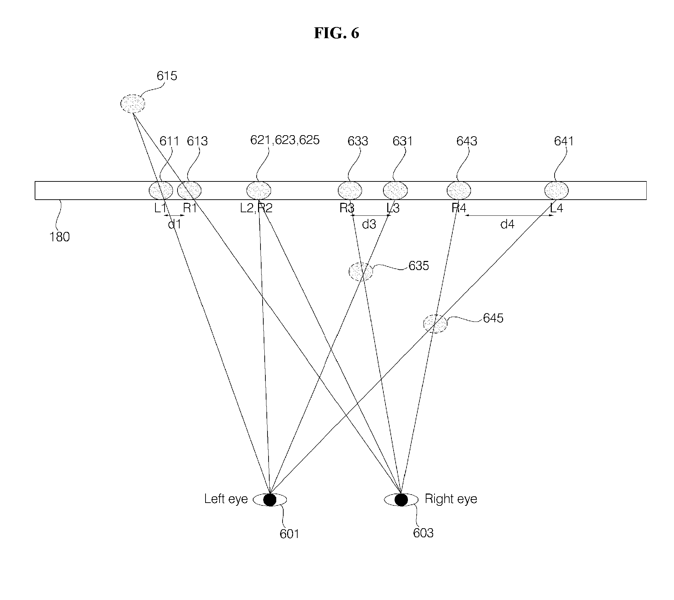

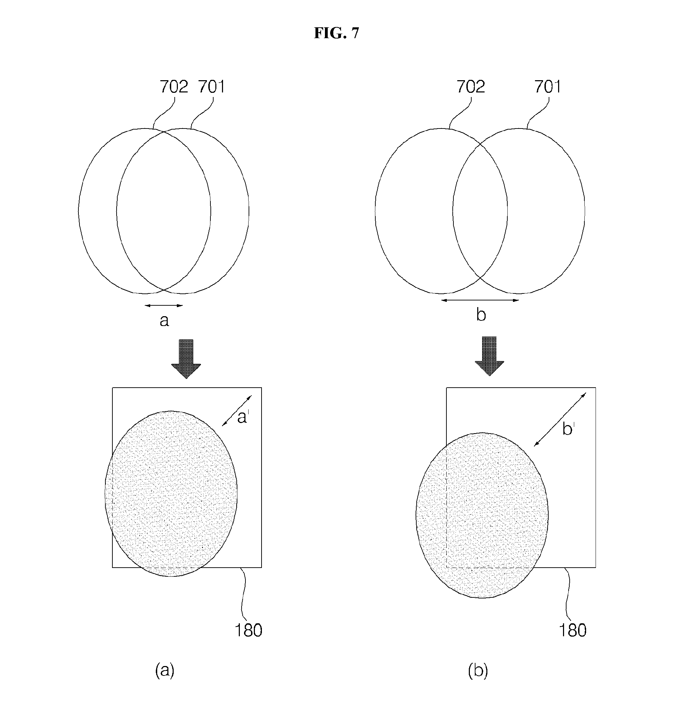

FIG. 6 illustrates a case where a video is formed on the left and the right eye image, respectively and FIG. 7 illustrates depth sensed from a 3D video according to the distance between the left and the right eye image.

First, with reference to FIG. 6, multiple images and multiple objects 615, 625, 635, 645 are introduced.

First, it is assumed that a first object 615 is formed on a first left eye image 611, L based on a first left eye image signal and on a first right eye image 613, R based on a first right eye image signal; and the distance between the first left eye image 611, L and the first right eye image 613, R is measured to be d1 on the display 180. At this time, the user feels that a video is formed at the position where an extension line connecting the left eye 601 and the first left eye image 611 and an extension line connecting the right eye 603 and the first right eye image 603 crosses each other. Therefore, the user feels that the first object 615 is placed behind the display 180.

Next, it is assumed that a second object 625 is formed on a second left eye image 621, L and on a second right eye image 623, R; and is displayed being overlapped with each other on the display 180. Therefore, the distance between the two images is measured to be zero. Accordingly, the user feels that the second object 625 is located on the display 180.

Next, it is assumed that a third object 635 and a fourth object 645 are formed on a third left eye image 631, L and on a third right eye image 633, R; and on a fourth left eye image 641, L and on a fourth right eye image 643, R, respectively. The distances between the respective two images are measured to be d3 and d4.

As described above, the user feels that the third 635 and the fourth object 645 are located at the positions where the respective images are formed and figures illustrate that the two objects are recognized to be placed before the display 180.

At this time, the fourth object 645 is recognized to be located far before the third object 635, namely, to be more protruding, which is due to the fact that the distance d4 between the fourth left eye image 641, L and the fourth right eye image 643, R is larger than the distance d3 between the third left eye image 631, L and the third right eye image 633, R.

Meanwhile, in an embodiment of the present invention, the distance between the display 180 and the position of the object 615, 625, 635, 645 sensed by the user is represented in terms of depth. Accordingly, when the user feels that an object is located behind the display 180, the depth is assigned a negative value whereas when the user feels that an object is located in front of the display 180, the depth is assigned a positive value. In other words, as the degree of protrusion toward the user is getting larger, the magnitude of depth will be larger accordingly.

As can be seen from FIG. 7, when the distance b between the left eye image 701 and the right eye image 702 of FIG. 7(b) is smaller than the distance a between the left eye image 701 and the right eye image 702 of FIG. 7(a), the depth b' of a 3D object of FIG. 7(b) is smaller than the depth a' of a 3D object of FIG. 7(a).

As described above, if a 3D video is formed by the left and the right eye image, due to the distance between the left and the right eye image, the position at which a video is perceived to be formed by the user can be varied. Therefore, by adjusting the display distance between the left and the right eye image, the corresponding depth of a 3D video or a 3D object formed by the left and the right eye image can be adjusted.

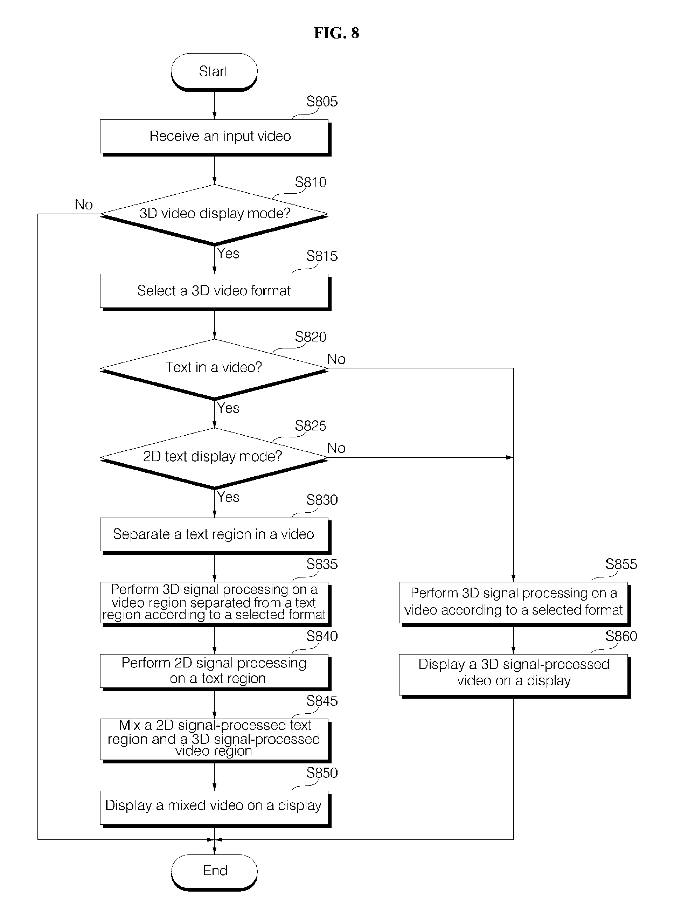

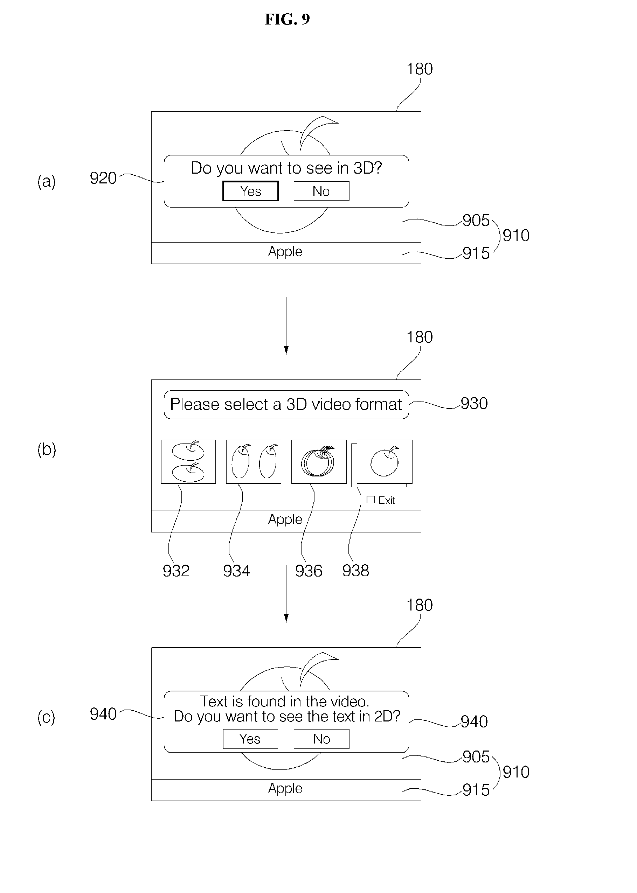

FIG. 8 is a flow diagram illustrating an operating method for a video display device according to an embodiment of the present invention; and FIGS. 9 to 16 illustrate various examples of an operating method for the video display device of FIG. 8.

With reference to FIG. 8, first, an input video is received S805. The input video may correspond to an external input video from an external device 190, an input video from a contents provider through a network, a broadcasting video from broadcasting signals received from the tuner 110, or a video stored in the memory 140. Meanwhile, the input video can be classified into a 3D or a 2D video.

Next, determined is whether or not it is a 3D video display mode S810.

The controller 170 determines whether an input video is a 3D video. For example, the controller 170 receives information in the header or meta data of an input video stream indicating whether the input video stream is a 3D video and based on the information, determines whether or not the input video stream is a 3D video. If such information is not available, the controller 170 analyzes the input video frames and determines whether the input video is in the same format as FIG. 4. For example, if a similar video region is found in a single frame as shown in the formats of FIG. 4(a), (b), (d), and (e) or if a similar image is found in adjacent image frames as shown in FIG. 4(c), the controller 170 can determined that the input video is a 3D video.

On the other hand, whether to display an input video in a 3D video display mode can be determined when a 3D video is received. In other words, if a 3D video is input, an input to determine whether to enter a 3D video display mode can be received.

FIG. 9(a) illustrates a situation where an object 920 indicating whether to enter a 3D video display mode is displayed while a video 910 including a video region 905 and a text region 915 is displayed on the display 180. According to the user's selection, a 3D video display mode is activated. The selection can be carried out by an arrow key input of a remote controller or movement of a pointer made by the user.

The controller 170 determines to enter the 3D video display mode when the corresponding input is received.

If a 3D video is received, it is also possible to enter the 3D video display mode autonomously.

Next, in the case of the 3D video display mode, a 3D video format is selected S815.

For example, irrespective of the format of an incoming 3D video, a 3D video format can be determined by the user's selection.

FIG. 9(b) illustrates a screen where a 3D video format is determined. An object 930 for setting a 3D video format and objects 932, 934, 936, 938 representing the respective formats can be displayed in the screen. In the figure, the top-down format 932, the side-by-side format 934, the checker box format 936, and the frame sequential format 938 are shown but various other formats are still allowed.

According to the user's selection, a particular format is determined. The selection can be performed by using an arrow key input of a remote control device and movement of a pointer.

Meanwhile, a 3D video format can also be determined autonomously according to the format of an incoming 3D video.

The formatter 260 arranges an input video according to a selected 3D video format.

Next, whether text is contained in a 3D video is determined S820.

The controller 170 determines whether text is contained in an incoming 3D video. Existence of text can be determined by a text extraction algorithm or by information indicating the existence of text being received.

Next, if text is contained in a 3D video, it is determined whether a text display mode is a 2D text display mode S825.

For example, according to the user's input, the text display mode can be set as a 2D text display mode or a 3D text display mode.

FIG. 9(c) illustrates a situation where an object 940 indicating whether to enter a 2D text display mode or a 3D text display mode is displayed while a video 910 including a video region 905 and a text region 915 is displayed on the display 180.

According to the user's selection, either of a 2D text display mode and a 3D text display mode is activated. The selection can be carried out by an arrow key input of a remote controller or movement of a pointer made by the user.

Next, if the text display mode is a 2D text display mode, a text region in a video is separated S830.

The controller 170 separates a text region in a video. As described in detail above, a text region can be separated based on a text extraction algorithm or information indicating existence of text being received. Position information of a text region can be added to an input video or generated separately. In particular, at the time of or prior to separation, position information of a text region can be generated.

Meanwhile, text in a video may be meant to include text generated at the OSD generation unit 240. In other words, based on a video signal mixed at the mixer 245, separation of a text region in a video can be performed. Therefore, the separation can be performed in the formatter 260.

It should be noted that although detection and separation of a text region described above can be all performed in the formatter 260, the detection and the separation is not limited to the above, allowing different examples.

In other words, detection of a text region can be performed in the video processing unit 220; information about text region detection and position information of a text region and so on are transferred to the formatter 260; and operation for separating the text region can be performed based on the information by the formatter 260.

In this case, the position information about a text region generated by the OSD generation unit 240 can also be transferred to the formatter 260 separately.

The position information of a text region processed in the video processing unit 220 may be determined based on a 3D format (3Dformat) and resolution (i.e., 1080P) of an input video. For example, the position information can be expressed by 2DMask_Pos_3Dformat_1080P = x_start, y_start, x_end, y_end. Here, x_start, y_start represent x, y start point within a video whle x_end, y_end represent x, y end point within the video.

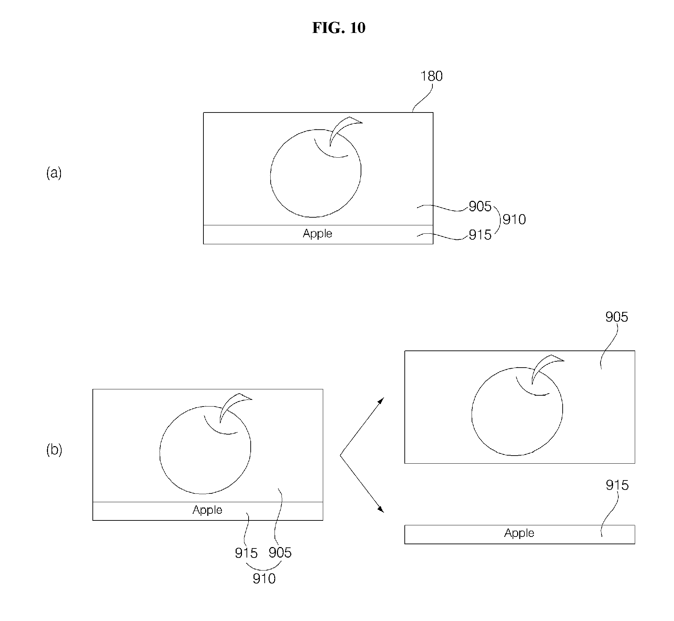

FIG. 10 illustrates one example of separating a text region in a video.

With reference to the figure, as shown in FIG. 10(a), a 3D video 910 can comprise a video region 905 and a text region 915. Although the figure illustrates that the text region 915 describes the contents of the video region 905, the present invention is not limited to the above but allows various other examples such as subtitles.

As shown in FIG. 10(b), the controller 170, particularly the formatter 260 can separate the text region 915 from the video region 905 by using position information of the text region.

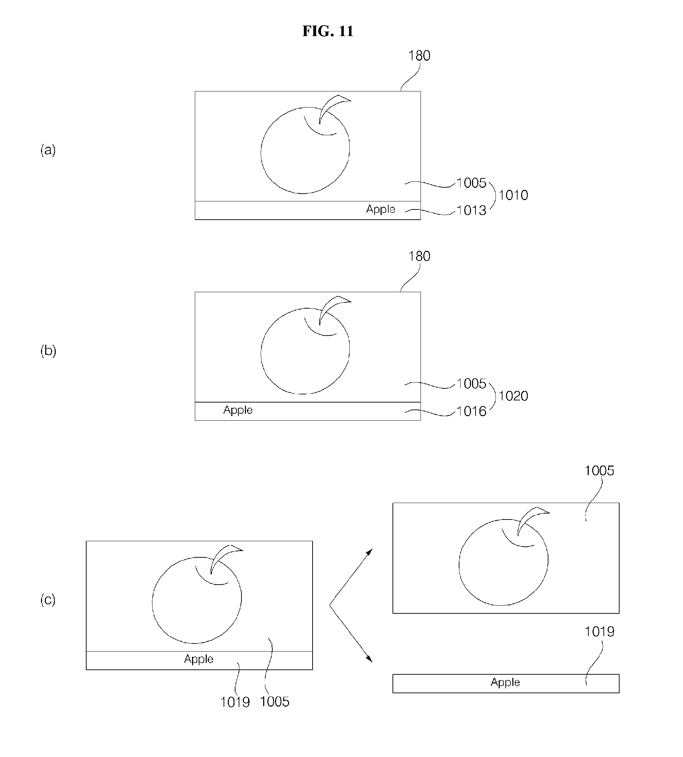

FIG.11 illustrates one example of separating a text region in a video.

Although FIG. 11 is similar to FIG. 10, it is different from FIG. 10 in that text in a text region is not fixed but moving. In this case, a text detection algorithm can be different from the case of fixed text.

FIG. 11(a) illustrates a video 1010 containing a video region 1005 and a text region 1013 seen from a first viewpoint while FIG. 11(b) illustrates a video 1020 containing a video region 1005 and a text region 1016 seen from a second viewpoint. It can be noticed from the figures that text position in the text region is varied.

As shown in FIG. 11(c), the controller 170, particularly the formatter 260 can separate the text region 1019 from the video region 1005 by using position information of the text region.

Next, 3D signal processing is performed on the video region separated from the text region S835 and 2D signal processing is performed on the text region S840. Then, the 2D signal-processed text region and the 3D signal-processed video region is mixed S845 and the mixed video is displayed on the display S850.

Next, the text region and the separated video region are processed individually. For example, the formatter 260 performs 2D signal processing on the text region while the formatter 260 performs 3D signal processing on the separated video region.

For example, the 2D signal processing may not arrange the text region in a frame according to the 3D format illustrated in FIG. 4. On the contrary, the 3D signal processing may arrange the corresponding video region according to the format determined at the S815 step. At the time of 2D signal processing, line transform or Hough transform can be applied to the text region.

The formatter 260 mixes the 2D signal-processed text region and the 3D signal-processed video region and outputs the mixed signal. The output video signal is an RGB data signal and can be fed into the display 180 according to LVDS transmission format. Then, the display 180 displays the input video signal.

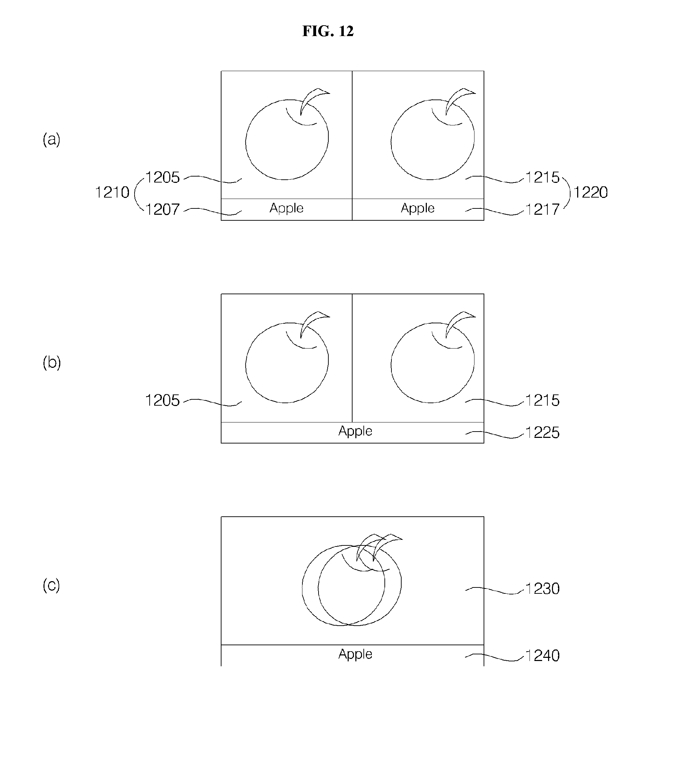

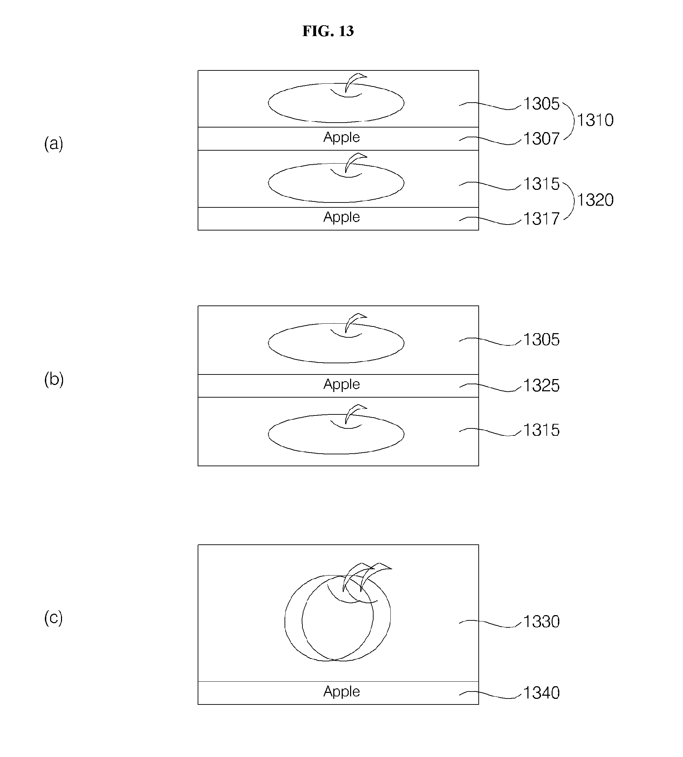

At the time of mixing, the formatter 260 can add the text region into multi-view video regions by duplicating the text (refer to FIGS. 12(a), 13(a), and 14(a)) or add the text into any one of multi-view video regions (refer to FIGS. 12(b) and 13(b)).

FIG. 12 illustrates displaying a text region in 2D when the video format is set to the side-by-side format at the S815 step.

First, as shown in FIG. 12(a), the left 1210 and the right eye image 1220 can each consists of a video region 1205, 1215 and a text region 1207, 1217. At this time, as described above, since 2D signal processing is performed on the text region, position of the text region may be the same in the left 1210 and the right eye image 1220. Namely, the position of the text can be the same in the two images. Compared with the text region, the video region 1205 of the left eye image and the video region 1215 of the right eye image can be different from each other.

When the video composed as above is displayed, as shown in FIG. 12(c), it is displayed as a combination of a 3D video region 1230 and a 2D text region 1240. Obviously, the user can watch the 3D video as shown in FIG. 12(c) by wearing polarized glasses.

Different from FIG. 12(a), the text region can be treated in a unified way without duplicating the text region into the left and the right eye text region. FIG. 12(b) illustrates an example where the text region 1225 is displayed across the left 1205 and the right eye image region 1215. Due to this, as shown in FIG. 12(c), the 3D video region 1230 and the 2D text region 1240 are displayed separately.

As described above, at the time of 3D video display, by performing 2D text display processing on a text region, sharp and clear text can be displayed.

FIG. 13 illustrates an example of displaying a text region in 2D when the video format is set to the top-down format at the S815 step.

As shown in FIG. 13(a), the left 1210 and the right eye image 1320 can each consists of a video region 1305, 1315 and a text region 1307, 1317. At this time, as described above, since 2D signal processing is performed on the text region, the position of the text region can be the same in the left 1310 and the right eye image 1320. Namely, the position of the text can be the same in the two images. Compared with the text region, the video region 1305 of the left eye image and the video region 1315 of the right eye image can be different from each other.

When the video composed as above is displayed, as shown in FIG. 13(c), it is displayed as a combination of a 3D video region 1330 and a 2D text region 1340. Obviously, the user can watch the 3D video as shown in FIG. 13(c) by wearing polarized glasses.

Different from FIG. 13(a), the text region can be treated in a unified way without duplicating the text region into the left and the right eye text region. FIG. 13(b) illustrates an example where the text region 1325 is displayed across the left 1305 and the right eye image region 1315. Due to this, as shown in FIG. 13(c), the 3D video region 1330 and the 2D text region 1340 are displayed separately.

As described above, at the time of 3D video display, by performing 2D text display processing on a text region, sharp and clear text can be displayed. Meanwhile, FIG. 13 illustrates the case where a text region is processed differently from that of FIG. 12 by varying the position of the text region according to a 3D video format.

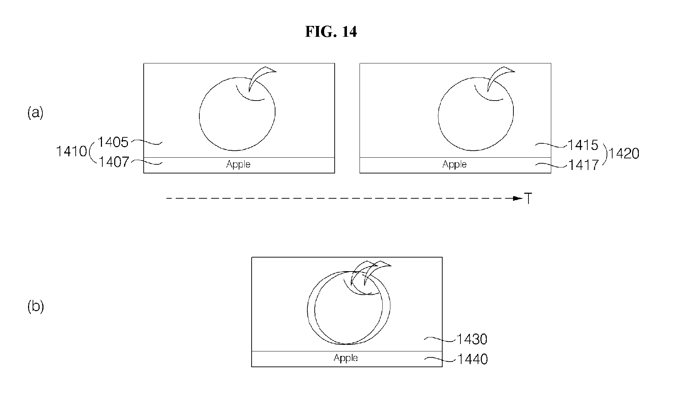

FIG. 14 illustrates an example of displaying a text region in 2D when the video format is set to the frame sequential format at the S815 step.

As shown in FIG. 14(a), the left 1410 and the right eye image 1420 at different viewpoints from each other can each consists of a video region 1405, 1415 and a text region 1407, 1417. At this time, as described above, since 2D signal processing is performed on the text region, the position of the text region can be the same in the left 1410 and the right eye image 1420. Namely, the position of the text can be the same in the two images. Compared with the text region, the video region 1405 of the left eye image and the video region 1415 of the right eye image can be different from each other.

When the video composed as above is displayed, as shown in FIG. 14(b), it is displayed as a combination of a 3D video region 1430 and a 2D text region 1440. Obviously, the user can watch the 3D video as shown in FIG. 14(b) by wearing polarized glasses.

On the other hand, if it is determined at the S825 step that a text display mode is a 3D text display mode rather than a 2D text display mode, 3D signal processing is performed on the video as a next step according to the selected format S855. The 3D signal-processed video is then displayed on the display S860.

The controller 170, particularly the formatter 260, performs 3D signal processing on the text region as it is. In other words, after detection of a text region described above, particular operation such as separation of a text region is not applied but 3D signal processing is performed the same on the text region together with a video region. In other words, according to a 3D format determined, the video region and the text region are arranged and processed together and a resultant signal is output. The display then displays the output signal.

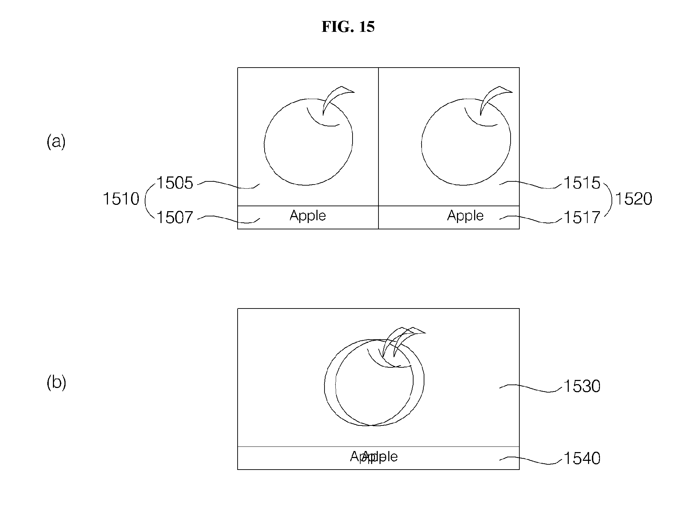

FIG. 15 illustrates an example of displaying a text region in 3D when the video format is set to the side-by-side format at the S815 step.

As shown in FIG. 15(a), the left 1510 and the right eye image 1520 can each consists of a video region 1505, 1515 and a text region 1507, 1517. At this time, as described above, since 3D signal processing is performed on the text region, the position of the text region can be different in the left 1210 and the right eye image 1220, respectively.

When the video composed as above is displayed, as shown in FIG. 15(b), it is displayed as a combination of a 3D video region 1530 and a 2D text region 1540. Obviously, the user can watch the 3D video as shown in FIG. 15(b) by wearing polarized glasses.

As described above, at the time of displaying a 3D video, text can be processed and displayed for 3D text display according to a setting for text display.

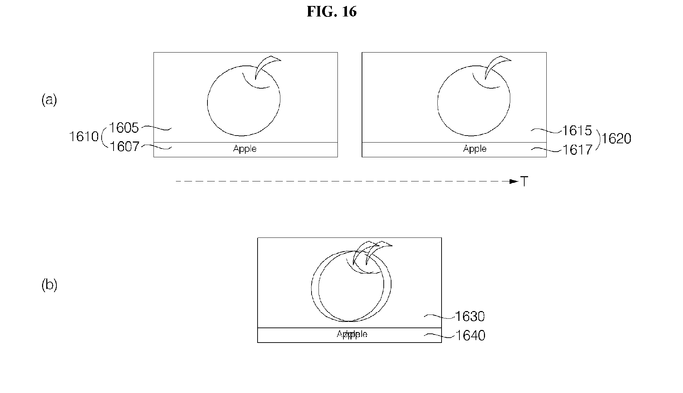

FIG. 16 illustrates an example of displaying a text region in 3D when the video format is set to the frame sequential format at the 815 step.

As shown in FIG. 16(a), the left 1610 and the right eye image 1620 at different viewpoints from each other can each consists of a video region 1605, 1615 and a text region 1607, 1617. At this time, as described above, since 3D signal processing is performed on the text region, the position of the text region can be different in the left 1610 and the right eye image 1620, respectively.

When the video composed as above is displayed, as shown in FIG. 16(b), it is displayed as a combination of a 3D video region 1630 and a 2D text region 1640. Obviously, the user can watch the 3D video as shown in FIG. 16(b) by wearing shutter glasses.

A video display device and an operating method for the device according to the present invention are not limited to the structure and the methods of embodiments described above; rather, the whole or part of each embodiment can be selectively combined to allow various modifications of the embodiments.

Meanwhile, an operating method for a video display device of the present invention can be implemented in the form of codes readable by a processor in a recording medium that can be readable by a processor installed in the video display device. A recording medium readable by a processor includes all kinds of recording medium storing data readable by a processor. Examples of recording media readable by a processor include ROM, RAM, CD-ROM, magnetic tape, floppy disk, optical data storage device, etc. Also, the recording media include implementation in the form of carrier waves such as transmission through the Internet. In addition, the recording media readable by a processor can be distributed across computer systems connected to each other through a network; in this case, codes readable by a processor can be stored and executed in a distributed manner.

This document discloses preferred embodiments of the present invention; however, the present invention is not limited to the particular embodiments above. On the contrary, it should be understood that various modifications of the embodiments are possible by those skilled in the art without departing the technical scope of the present invention defined by the appended claims. The modifications should not be understood separately from the technical principles or prospects of the present invention.

## Claims

1. An operating method for a video display device comprising the steps of:
determining whether or not a text is contained in an input video;
determining whether or not a text display mode is a 2D text display mode when a text is contained in the video;
separating a text region in the video when the text display mode is a 2D text display mode;
performing 3D signal processing on the video region separated from the text region;
performing 2D signal processing on the text region; and
displaying the 2D signal-processed text region and the 3D signal-processed video region on a display.

2. The operating method of claim 1, wherein the separating step is carried out when the text display mode is a 2D text display mode.

3. The operating method of claim 1, comprising:
performing 3D signal processing on the video containing the text region when the text display mode is a 3D text display mode; and
displaying the 3D signal-processed video on the display.

4. The operating method of claim 1, further comprising
determining whether a display mode of the input video is a 3D video display mode.

5. The operating method of claim 1, further comprising
selecting a 3D video format when a display mode of the input is a 3D video display mode and the step of performing 3D signal processing comprising:
separating the separated video into multi-view videos; and
arranging the separated multi-view videos according to the selected 3D video format.

6. The operating method of claim 1, wherein the step of separating a text region separates the text region according to the text position information received additionally to the video.

7. The operating method of claim 1, wherein the step of separating a text region separates the text region according to a detection algorithm detecting text in the video.

8. The operating method of claim 5, wherein the displaying step varies position of the text region according to the selected 3D video format.

9. The operating method of claim 1, further comprising
mixing the 2D signal-processed text region and the 3D signal-processed video region; and the mixing step
adding a text region into any one video region among the 3D signal-processed multi-view video regions.

10. The operating method of claim 1, further comprising
mixing the 2D signal-processed text region and the 3D signal-processed video region; and the mixing step
adding the text region being overlapped with the 3D signal-processed multi-view video regions.

11. A video display device comprising:
a controller to separate a text region in an input video when a display mode for text contained in the video corresponds to a 2D text display mode and to perform 3D signal processing on a video region separated from the text region and to perform 2D signal processing on the text region; and
a display to display the 2D signal-processed text region and the 3D signal-processed video region.

12. The video display device of claim 11, wherein the controller comprises:
a video processing unit to decode the input video; and
a formatter to separate a text region in the decoded video and to perform 3D signal processing on a video region separated from the text region and to perform 2D signal processing on the text region.

13. The video display device of claim 12, wherein the controller further comprises:
an OSD generation unit to generate an OSD; and
a mixer to mix the decoded video and the OSD; and
wherein the formatter separates a text region in the mixed signal and performs 3D signal processing on a video region separated from the text region and performs 2D signal processing on the text region.

14. The video display device of claim 12, wherein the formatter performs 3D signal processing on the video containing the text region when the text display mode is a 3D text display mode.

15. The video display device of claim 12, wherein the formatter arranges a separated multi-view video according to a predetermined 3D video format when a display mode of the input video is a 3D video display mode.

16. The video display device of claim 12, wherein the formatter receives text position information received additionally to the video and separates the text region according to the text position information.

17. The video display device of claim 12, wherein the formatter varies position of the text region according to a 3D video format.

18. The video display device of claim 12, wherein the formatter mixes the 2D signal-processed text region and the 3D signal-processed video region and at the time of mixing, adds a text region into any one video region among the 3D signal-processed multi-view video regions.

19. The video display device of claim 12, wherein the formatter mixes the 2D signal-processed text region and the 3D signal-processed video region and at the time of mixing, adds a text region being overlapped with the 3D signal-processed multi-view video regions.
